# EUROPÄISCHE PATENTSCHRIFT

(11) **EP 2 801 497 B1**
(45) Veröffentlichungstag und Bekanntmachung des Hinweises auf die Patenterteilung: **22.04.2020**
(21) Anmeldenummer: 13005530.4
(22) Anmeldetag: 28.11.2013
(51) Int. Cl.: B60L 9/00, H02J 1/04, B60L 53/22, B60L 58/12, B60L 58/20, H02J 7/00, H02J 7/14

(54) **Ladeeinrichtung und Verfahren zum Betrieb einer Ladeeinrichtung**
Charging device and method for operating a charging device
Dispositif de charge et procédé de fonctionnement d'un dispositif de charge

(30) Priorität: 25.04.2013 DE 102013007185
(43) Veröffentlichungstag der Anmeldung: 12.11.2014
(73) Patentinhaber: MAN Truck & Bus SE, 80995 München (DE)
(72) Erfinder: Pfau, Stefan, 82377 Penzberg (DE); John, Dennis, 81371 München (DE)
(74) Vertreter: Liebl, Thomas

(56) Entgegenhaltungen:
- EP-A2- 0 784 374
- EP-A2- 2 388 884
- WO-A1-2007/128876
- WO-A1-2012/063331
- WO-A2-2008/117239
- DE-A1-102011 079 430
- US-A- 5 352 968
- US-A1- 2005 017 677

## Beschreibung

Die Erfindung betrifft ein Verfahren zum Betrieb einer Ladeeinrichtung mit mehreren Ladewandlern gemäß dem Oberbegriff des Patentanspruchs 1 sowie eine Ladeeinrichtung zur Durchführung des Verfahrens gemäß dem Patentanspruch 6.

In Hybrid- und Elektrofahrzeugen entfällt die sonst notwendige Lichtmaschine zur Versorgung des Niedervolt-Bordnetzes. Die Funktion der Lichtmaschine wird durch eine Ladeeinrichtung übernommen, die mehrere Ladewandler umfassen kann. Die einzelnen Ladewandler liegen eingangsseitig an einer Gleichspannung an, die von Energiespeichern eines Gleichstromnetzes bereitgestellt wird. Die Ladewandler wandeln die eingangsseitig anliegende Gleichspannung in eine Niedervolt-Bordnetzspannung um, so dass die Ladewandler ausgangsseitig als Spannungsversorgung für das Niedervolt-Bordnetz dienen. Zum Beispiel offenbart die veröffentlichte Patentanmeldung WO 2012/063331 A1 eine Anordnung mit mehreren Ladewandlern.

Bei Verwendung mehrerer Ladewandler in einer Ladeeinrichtung ergibt sich die Problematik, dass aufgrund von Bauteiletoleranzen und aufgrund von unterschiedlichen Leitungsführungen zu den jeweiligen Verbrauchern unterschiedlich große Ladeströme fließen, selbst wenn jeder Ladewandler auf die gleiche ausgangsseitige Soll-Ladespannung eingestellt wird.

Der Erfindung liegt die Aufgabe zugrunde, ein Verfahren zum Betrieb einer Ladeeinrichtung mit mehreren Ladewandlern anzugeben, mit dem die von den Ladewandlern in das Niedervolt-Bordnetz eingespeisten Ladeströme möglichst gleich groß sind.

Die Lösung dieser Aufgabe erhält man durch die im Patentanspruch 1 angegebenen Merkmale. Besonders vorteilhafte Weiterbildungen des erfindungsgemäßen Verfahrens sind in den Unteransprüchen 2 bis 5 offenbart.

Gemäß dem kennzeichnenden Teil des Patentanspruch 1 wird von einer Steuerung sämtlichen Ladewandlern eine gemeinsame ausgangsseitige Soll-Ladespannung vorgegeben und jeder Ladewandler misst zyklisch seinen ausgangsseitigen Ladestrom und beaufschlagt in Abhängigkeit von dem ausgangsseitigen Ladestrom die Soll-Ladespannung mit einem Korrekturspannungswert, so dass sich ausgangsseitig eine entsprechend korrigierte Ladespannung ergibt. Die Korrektur der ausgangsseitigen Ladespannung kann an jedem Ladewandler mittels einer analogen Steuerung oder aber auch durch digitale Steuerelemente erfolgen. Vorzugsweise wird jedem gemessenen ausgangsseitigen Ladestrom ein von der Höhe des Ladestroms abhängiger Korrekturspannungswert zugeordnet. Die Vielzahl unterschiedlicher Korrekturspannungswerte, die unterschiedlichen Ladestromwerten zugeordnet sind, kann in einem Kennlinien- oder Kennfeldspeicher abgelegt sein.

Durch die Korrektur der ausgangsseitigen Ladespannung ergibt sich eine Gleichverteilung für die Ladeströme der einzelnen Ladewandler. Ist beispielsweise bei einem ersten Ladewandler der Ladestrom höher als bei einem zweiten Ladewandler, so wird die ausgangsseitige Ladespannung des ersten Ladewandlers um einen Korrekturspannungswert verringert, der größer ist als ein möglicher Korrekturspannungswert für den zweiten Ladewandler. Liegt der Ladestrom beim zweiten Ladewandler auf einem vorgegebenen Sollwert für die vorgesehene Soll-Ladespannung, so kann eine Spannungskorrektur unterbleiben. Durch die zyklische Messung des ausgangsseitigen Ladestroms und die damit verbundene Spannungskorrektur an den Ladespannungen der einzelnen Ladewandler, wird eine Gleichverteilung der Ladeströme auf alle Ladewandler erreicht, wodurch Überbelastungen einzelner Ladewandler vermieden werden, was sich sehr positiv auf die Lebensdauer und die Effektivität der Ladewandler auswirkt.

Zur Korrektur der ausgangsseitigen Ladespannung an den Ladewandlern kann in Abhängigkeit von dem vorgegebenen Korrekturspannungswert der Innenwiderstand des jeweiligen Ladewandlers entsprechend verändert werden. Die Korrektur der Ladespannung kann auch mittels eines Spannungsaddierers oder einer sonstigen Spannungs-Steuereinrichtung erfolgen.

Besonders vorteilhaft ist es, den Korrekturspannungswert aus einem Kennfeldspeicher zugehörig zum jeweils zyklisch gemessenen Ladestrom auszulesen. In einem solchen Kennfeldspeicher können Korrekturspannungswerte in Abhängigkeit unterschiedlicher Parameter abgelegt sein. So können beispielsweise die Werte von Ladestrom-Korrekturspannungskennlinien abgespeichert sein, die für eine unterschiedliche Anzahl von vorgesehenen Ladewandlern spezifiziert sind. Dabei können auch unterschiedliche Ladestrom-Korrekturspannungskennfelder vorgesehen sein, die von der jeweils vorgegebenen Soll-Ladespannung abhängig sind.

Für unterschiedliche Soll-Ladespannungen kann jedem Ladewandler ein bestimmter Soll-Ladestrom in einem Kennfeldspeicher zugeordnet werden. Treten Abweichungen von dem Soll-Ladestrom in einem Ladewandler auf, so korrigiert dieser selbsttätig seine ausgangsseitige Ladespannung mit einem Korrekturspannungswert, der vorzugsweise einem Kennfeldspeicher entnommen werden kann.

Der Erfindung liegt die weitere Aufgabe zugrunde, eine Ladeeinrichtung vorzusehen, die zur Durchführung des erfindungsgemäßen Verfahrens geeignet ist und für den Einsatz in unterschiedlichen Niedervolt-Bordnetzen mit unterschiedlichen Leistungsanforderungen geeignet ist.

Die Lösung dieser Aufgabe erhält man mittels einer Ladeeinrichtung mit den Merkmalen des Patentanspruchs 6. Eine vorteilhafte Weiterbildung der Ladeeinrichtung ist im Patentanspruch 7 gekennzeichnet.

Bei der Ladeeinrichtung nach Patentanspruch 6 ist vorgesehen, dass jeder Ladewandler eine Strommesseinrichtung für den von ihm in ein Niedervolt-Bordnetz eingespeisten Ladestrom hat, dass jeder Ladewandler einen Korrekturspannungswert in Abhängigkeit vom gemessenen Ladestrom zur Einstellung der an das Niedervolt-Bordnetz angelegten Ladespannung bestimmt und die Ladespannung an einer steuerbaren Spannungsquelle einstellt. Die Einstellung der Ladespannung kann in der Weise erfolgen, dass ein relativ hoher Ladestrom zu einer größeren Reduzierung der ausgangsseitigen Ladespannung am Ladewandler führt. Dagegen führt ein etwas niedrigerer Ladestrom an einem Ladewandler zu einer geringeren Reduzierung der ausgangsseitigen Ladespannung. Durch eine zyklische Wiederholung der Spannungskorrektur an der ausgangsseitigen Ladespannung eines jeden Ladewandlers ergibt sich, dass die Ladeströme der Ladewandler sich allmählich auf einen einheitlichen gleichen Wert einstellen.

Jeder Ladewandler kann einen Kennfeldspeicher oder einen Kennlinienspeicher enthalten, in dem zugeordnet zu unterschiedlichen Soll-Ladespannungswerten und zu unterschiedlichen Anzahlen von in der Ladeeinrichtung vorgesehenen Ladewandlern ladestromabhängige Korrekturspannungswerte abgespeichert sind. Damit kann jeder Ladewandler selbsttätig die Anpassung seines ausgangsseitigen Ladestroms so vornehmen, dass eine Angleichung sämtlicher Ladeströme der Ladewandler erfolgt.

Die Erfindung wird nachfolgend anhand von in der Zeichnung dargestellten Ausführungsbeispielen näher erläutert.

Es zeigen:
- Fig. 1: das Schaltbild einer erfindungsgemäßen Ladeeinrichtung zur Versorgung eines Niedervolt-Bordnetzes in einem Elektro- oder Hybridfahrzeug,
- Fig. 2: eine schematische Darstellung der Beaufschlagung der Soll-Ladespannung mit einem Korrekturspannungswert und
- Fig. 3: ein vereinfachtes Ersatzschaltbild der Ladewandler einer Ladeeinrichtung, wobei die Ladewandler variable Innenwiderstände haben.

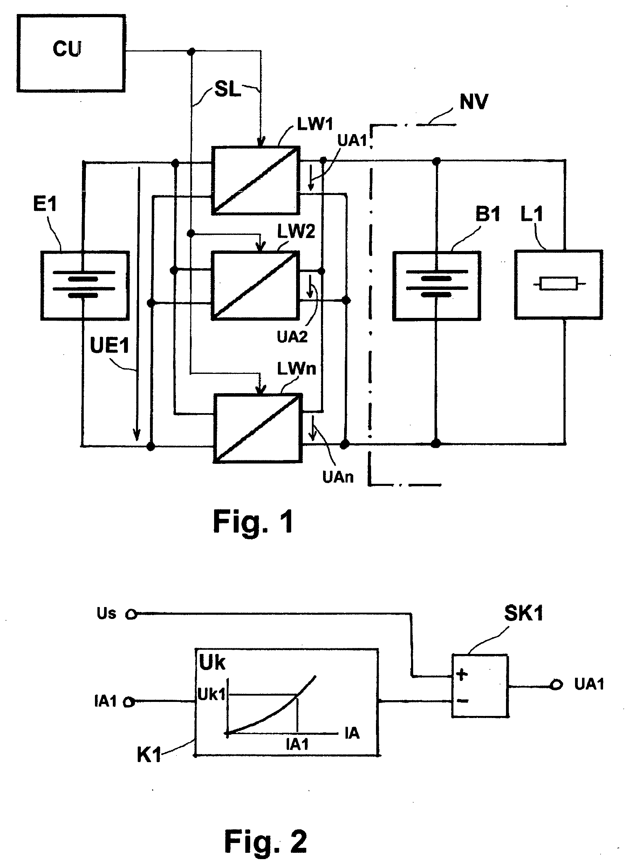

Das Blockschaltbild von Figur 1 umfasst mehrere Ladewandler LW1 bis LWn, die ein Niedervolt-Bordnetz NV mit Energie versorgen, welches vereinfacht dargestellt aus einem Energiespeicher B1 und einem Lastkollektiv L1 besteht. Eingangsseitig sind die Lastwandler LW1 bis LWn an eine Energiequelle E1 abgeschlossen, die eine Gleichspannung an die parallel geschalteten Eingänge der Ladewandler LW1 bis LWn anlegt. Eine Steuerung CU ist über Steuerleitungen SL mit Steuereingängen der Ladewandler LW1 bis LWn verbunden, über die die Steuerung CU den Ladewandlern LW1 bis LWn eine Soll-Ladespannung vorgibt.

Der Energiespeicher E1 kann außerdem zur Versorgung des elektrischen Antriebs eines Kraftfahrzeugs vorgesehen sein, während der im Niedervolt-Bordnetz NV vorgesehene Energiespeicher B1 als herkömmliche Niedervolt-Bordnetzbatterie ausgebildet sein kann. Die Ladewandler LW1 bis LWn wandeln die an ihnen eingangsseitig anliegende Gleichspannung UE1 in Ausgangsspannungen UA1 bis UAn um. Unter idealen Bedingungen ohne Bauteiletoleranzen und ohne unterschiedliche Leitungswiderstände würden die ausgangsseitigen Ladespannungen UA1 bis UAn den Wert der von der Steuerung CU vorgegebenen Soll-Ladespannung aufweisen. Unter realen Bedingungen ergibt sich aber, dass aufgrund von Bauteiletoleranzen und unterschiedlich großen Leitungswiderständen bei identisch vorgegebenen Soll-Ladespannungen unterschiedliche Ladeströme IA1 bis IAn von den Ladewandlern LW1 bis LWn in das Niedervolt-Bordnetz NV eingespeist würden. Unterschiedliche Ladeströme verschlechtern die Effizienz der Ladeeinrichtung und können sich negativ auf die Lebensdauer einzelner Ladewandler auswirken. Aus diesem Grund wird zur Anpassung der ausgangsseitigen Ladeströme IA1 bis IAn jede der Ladespannungen UA1 bis UAn in Abhängigkeit von dem jeweils am Ladewandler LW1 bis LWn gemessenen Ladestrom IA1 bis IAn korrigiert.

Anhand der Darstellung von Figur 2 wird nachfolgend, beispielhaft für den Ladewandler LW1, erläutert, wie die Korrektur der Ladespannung UA1 durchgeführt wird. Hierzu wird die von der Steuerung CU vorgegebene Soll-Ladespannung Us mit einem Korrekturspannungswert beaufschlagt, der vom jeweiligen Ladestrom abhängt. Bei dem in Figur 2 dargestellten Beispiel wird der ausgangsseitige Ladestrom IA1 des Ladewandlers LW1 gemessen und in Abhängigkeit von dem gemessenen Stromwert wird aus einem Kennfeldspeicher K1 ein zugeordneter Korrekturspannungswert Uk1 ausgelesen. Dieser Korrekturspannungswert Uk1 wird mit der Soll-Ladespannung Us in einer Spannungs-Korrektureinrichtung SK1 verknüpft. Im dargestellten Ausführungsbeispiel wird der Korrekturspannungswert Uk1 von dem vorgegebenen Wert für die Soll-Ladespannung Us abgezogen, so dass sich eine gegenüber der vorgegebenen Soll-Ladespannung reduzierte ausgangsseitige Ladespannung UA1 am Ladewandler LW1 ergibt. Die Korrektur der ausgangsseitigen Ladespannung UA1 wird zyklisch durchgeführt, das heißt dass in wiederholten Messungen der Ladestrom IA1 gemessen wird und davon abhängig ein Korrekturspannungswert aus dem Kennfeld K1 abgefragt und zur Spannungskorrektur herangezogen wird.

Eine derartige zyklische Spannungskorrektur wird in jedem der Ladewandler LW1 bis LWn intern durchgeführt. Dadurch stellt sich eine Angleichung der Ladeströme IA1 bis IAn für sämtliche Ladewandler LW1 bis LWn ein.

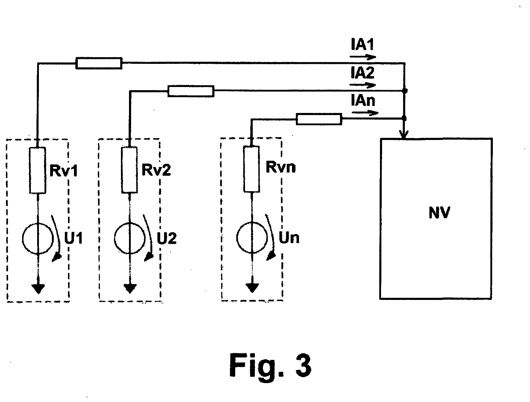

Die Spannungskorrektureinrichtungen SK1 bis SKn der Ladewandler LW1 bis LWn können steuerbare Spannungsquellen sein, die analog oder digital arbeiten. Welche Art von steuerbarer Spannungsquelle bzw. von einstellbarer Spannungsquelle jeweils verwendet wird, ist anwendungsspezifisch wählbar. Beispielsweise können hierfür auch Spannungsquellen mit variablem Innenwiderstand Verwendung finden, wie dies bei dem Ersatzschaltbild von Figur 3 vorgesehen ist.

Gemäß Figur 3 beinhaltet jeder Ladewandler LW1 bis LWn eine Spannungsquelle, die eine Spannung U1 bis Un bereitstellt. Über variable Innenwiderstände Rv1 bis Rvn können die Ausgangsspannungen UA1 bis UAn so korrigiert werden, dass gleiche ausgangsseitige Ladeströme IA1 bis IAn in das Niedervolt-Bordnetz NV fließen.

## Patentansprüche

1. Verfahren zum Betrieb einer Ladeeinrichtung mit mehreren, auf eine erforderliche Ladeleistung abgestimmte Anzahl von Ladewandlern (LW1 bis LWn), die gemeinsam ein Niedervolt-Bordnetz (NV) eines Hybrid- oder Elektrofahrzeugs speisen, wobei die Ladewandler (LW1 bis LWn) eine von einer Energiequelle (E1) bereitgestellte Gleichspannung (UE1) in ausgangsseitige Ladespannungen (UA1 bis UAn) umwandeln, **dadurch gekennzeichnet, dass** eine Steuerung (CU) sämtlichen Ladewandlern (LW1 bis LWn) eine gemeinsame Soll-Ladespannung (Us) vorgibt, und dass jeder Ladewandler (LW1 bis LWn) in Abhängigkeit von seinem ausgangsseitigen Ladestrom (IA1 bis IAn), der zyklisch von dem jeweiligen Ladewandler (LW1 bis LWn) gemessen wird, die vorgegebene Soll-Ladespannung (Us) mit einem Korrekturspannungswert (Uk) beaufschlagt und als ausgangsseitige Ladespannung (UA1 bis UAn) festlegt.

2. Verfahren nach Anspruch 1, **dadurch gekennzeichnet, dass** in Abhängigkeit von dem Korrekturspannungswert (Uk) der Innenwiderstand (Rv1 bis Rvn) des jeweiligen Ladewandlers (LW1 bis LWn) variiert wird.

3. Verfahren nach einem der Ansprüche 1 oder 2, **dadurch gekennzeichnet, dass** der Korrekturspannungswert (Uk) aus einem Kennfeldspeicher (K1) zugehörig zum Stromwert des jeweils zyklisch gemessenen Ladestroms (IA1 bis IAn) ausgelesen wird.

4. Verfahren nach Anspruch 3, **dadurch gekennzeichnet, dass** im Kennfeldspeicher (K1) Ladestrom-Korrekturspannungskennlinien abgelegt sind, die der jeweils verwendeten Anzahl von vorgesehenen Ladewandlern (LW1 bis LWn) und dem jeweils vorgegebenen Soll-Ladungsspannungswert zugeordnet sind.

5. Verfahren nach einem der vorhergehenden Ansprüche, **dadurch gekennzeichnet, dass** jeder Soll-Ladespannung (Us) ein Sollwert für den Ladestrom (IA1 bis IAn) zugeordnet ist, und dass bei einer festgestellten Abweichung des Ladestroms (IA1 bis IAn) von dem Sollwert eine Spannungskorrektur an der Ladespannung (UA1 bis UAn) vorgenommen wird.

6. Ladeeinrichtung mit mehreren Ladewandlern (LW1 bis LWn), die gemeinsam ein Niedervolt-Bordnetz (NV) eines Hybrid- oder Elektrofahrzeugs speisen, zur Durchführung eines Verfahrens nach einem der vorhergehenden Ansprüche **dadurch gekennzeichnet, dass** jeder Ladewandler (LW1 bis LWn) eine Strommesseinrichtung für den von ihm in ein Niedervolt-Bordnetz (NV) eingespeisten Ladestrom (IA1 bis IAn) hat, dass jeder Ladewandler (LW1 bis LWn) einen Korrekturspannungswert (Uk) in Abhängigkeit vom gemessenen Ladestrom (IA1 bis IAn) zur Einstellung der an dem Niedervolt-Bordnetz (NV) angelegten Ladespannung (UA1 bis UAn) bestimmt und die Ladespannung (UA1 bis UAn) an einer steuerbaren Spannungsquelle oder einer andern Spannungskorrektureinrichtung (SK1 bis SKn) einstellt.

7. Ladeeinrichtung nach Anspruch 6, **dadurch gekennzeichnet, dass** jeder Ladewandler (LW1 bis LWn) einen Kennfeldspeicher (K1 bis Kn) hat, in dem zugeordnete zu unterschiedlichen Soll-Ladespannungswerten und zu unterschiedlichen Anzahlen von in der Ladeeinrichtung vorgesehenen Ladewandlern (LW1 bis LWn) ladestromabhängige Korrekturspannungswerte (Uk) in Form von Ladestrom-Korrekturspannungskennlinien abgespeichert sind.

8. Fahrzeug, insbesondere Hybrid- und/oder Elektrofahrzeug, mit einer Ladeeinrichtung nach Anspruch 6 oder 7, insbesondere mit einer Ladeeinrichtung zur Durchführung eines Verfahrens nach einem der Ansprüche 1 bis 5.

## Claims

1. Method for operating a charging device with multiple charging converters (LW1 to LWn) in a number adapted to a required charging power, which charging converters together feed a low-voltage on-board electrical system (NV) of a hybrid or electric vehicle, wherein the charging converters (LW1 to LWn) convert a direct-current voltage (UE1) provided by an energy source (E1) into output-side charging voltages (UA1 to UAn), **characterized in that** a controller (CU) predefines a common setpoint charging voltage (Us) for all charging converters (LW1 to LWn), and **in that** each charging converter (LW1 to LWn), in a manner dependent on its output-side charging current (IA1 to IAn), which is measured cyclically by the respective charging converter (LW1 to LWn), applies a corrective voltage value (Uk) to the predefined setpoint charging voltage (Us) and sets this as output-side charging voltage (UA1 to UAn).

2. Method according to Claim 1, **characterized in that** the internal resistance (Rv1 to Rvn) of the respective charging converter (LW1 to LWn) is varied in a manner dependent on the corrective voltage value (Uk).

3. Method according to either of Claims 1 and 2, **characterized in that** the corrective voltage value (Uk) is read out of a characteristic map memory (K1) in association with the current value of the respectively cyclically measured charging current (IA1 to IAn).

4. Method according to Claim 3, **characterized in that**, in the characteristic map memory (K1), there are stored charging current corrective voltage characteristic curves which are assigned to the respectively used number of provided charging converters (LW1 to LWn) and to the respectively predefined setpoint charging voltage value.

5. Method according to any of the preceding claims, **characterized in that** each setpoint charging voltage (Us) is assigned a setpoint value for the charging current (IA1 to IAn), and **in that**, if a deviation of the charging current (IA1 to IAn) from the setpoint value is detected, a voltage correction is made to the charging voltage (UA1 to UAn).

6. Charging device with multiple charging converters (LW1 to LWn), which together feed a low-voltage on-board electrical system (NV) of a hybrid or electric vehicle, for carrying out a method according to any of the preceding claims, **characterized in that** each charging converter (LW1 to LWn) has a current measuring device for the charging current (IA1 to IAn) fed by it into a low-voltage on-board electrical system (NV), **in that** each charging converter (LW1 to LWn) determines a corrective voltage value (Uk) in a manner dependent on the measured charging current (IA1 to IAn) in order to set the charging voltage (UA1 to UAn) applied to the low-voltage on-board electrical system (NV), and sets the charging voltage (UA1 to UAn) at a controllable voltage source or some other voltage correction device (SK1 to SKn).

7. Charging device according to Claim 6, **characterized in that** each charging converter (LW1 to LWn) has a characteristic map memory (K1 to Kn) in which charging-current-dependent corrective voltage values (Uk) assigned to different setpoint charging voltage values and to different numbers of charging converters (LW1 to LWn) provided in the charging device are stored in the form of charging current corrective voltage characteristic curves.

8. Vehicle, in particular hybrid and/or electric vehicle, having a charging device according to Claim 6 or 7, in particular having a charging device for carrying out a method according to any of Claims 1 to 5.

## Revendications

1. Procédé pour faire fonctionner un dispositif de charge comprenant plusieurs convertisseurs de charge (LW1 à LWn) dont le nombre est adapté à une puissance de charge nécessaire, lesquels alimentent ensemble un réseau de bord à basse tension (NV) d'un véhicule hybride ou électrique, les convertisseurs de charge (LW1 à LWn) convertissant une tension continue (UE1) fournie par une source d'énergie (E1) en des tensions de charge (UA1 à UAn) côté sortie, **caractérisé en ce qu'**une commande (CU) indique préalablement à tous les convertisseurs de charge (LW1 à LWn) une tension de charge de consigne (Us) commune et **en ce que** chaque convertisseur de charge (LW1 à LWn) applique, à la tension de charge de consigne (Us) prédéfinie, une valeur de tension de correction (Uk) en fonction de son courant de charge (IA1 à IAn) côté sortie, lequel est mesuré cycliquement par le convertisseur de charge (LW1 à LWn) respectif, et la fixe en tant que tension de charge (UA1 à UAn) côté sortie.

2. Procédé selon la revendication 1, **caractérisé en ce que** la résistance interne (Rv1 à Rvn) du convertisseur de charge (LW1 à LWn) respectif est modulée en fonction de la valeur de tension de correction (Uk).

3. Procédé selon l'une des revendications 1 ou 2, **caractérisé en ce que** la valeur de tension de correction (Uk) est lue à partir d'une mémoire de diagramme caractéristique (K1) en association avec la valeur de courant du courant de charge (IA1 à IAn) respectivement mesuré cycliquement.

4. Procédé selon la revendication 3, **caractérisé en ce que** des courbes caractéristiques de tension de correction de courant de charge sont stockées dans la mémoire de diagramme caractéristique (K1), lesquelles sont associées au nombre respectivement utilisé de convertisseurs de charge (LW1 à LWn) présents et à la valeur de tension de charge de consigne respectivement prédéfinie.

5. Procédé selon l'une des revendications précédentes, **caractérisé en ce qu'**une valeur de consigne pour le courant de charge (IA1 à IAn) est affectée à chaque tension de charge de consigne (Us), et **en ce que** dans le cas d'un écart constaté entre le courant de charge (IA1 à IAn) et la valeur de consigne, une correction de tension est effectuée au niveau de la tension de charge (UA1 à UAn).

6. Dispositif de charge comprenant plusieurs convertisseurs de charge (LW1 à LWn) qui alimentent ensemble un réseau de bord à basse tension (NV) d'un véhicule hybride ou électrique, destiné à mettre en œuvre un procédé selon l'une des revendications précédentes, **caractérisé en ce que** chaque convertisseur de charge (LW1 à LWn) comporte un dispositif de mesure du courant pour le courant de charge (IA1 à IAn) injecté par lui dans un réseau de bord à basse tension (NV), **en ce que** chaque convertisseur de charge (LW1 à LWn) détermine une valeur de tension de correction (Uk) en fonction du courant de charge (IA1 à IAn) mesuré en vue de régler la tension de charge (UA1 à UAn) appliquée au réseau de bord à basse tension (NV) et règle la tension de charge (UA1 à UAn) au niveau d'une source de tension commandable ou d'un autre dispositif de correction de tension (SK1 à SKn).

7. Dispositif de charge selon la revendication 6, **caractérisé en ce que** chaque convertisseur de charge (LW1 à LWn) possède une mémoire de diagramme caractéristique (K1 à Kn) dans laquelle sont mémorisées sous la forme de courbes caractéristiques de tension de correction de courant de charge des valeurs de tension de correction (Uk) dépendantes du courant de charge associées pour différentes valeurs de tension de charge de consigne et pour différents nombres de convertisseurs de charge (LW1 à LWn) présents dans le dispositif de charge.

8. Véhicule, notamment véhicule hybride et/ou électrique, comprenant un dispositif de charge selon la revendication 6 ou 7, comprenant notamment un dispositif de charge destiné à mettre en œuvre un procédé selon l'une des revendications 1 à 5.
